# EUROPEAN PATENT APPLICATION

(11) **EP 4 672 569 A1**
(43) Date of publication of application: **31.12.2025**
(21) Application number: 25180079.3
(22) Date of filing: 02.06.2025
(51) Int. Cl.: H02K 5/22, H02K 11/33

(54) **WIRING CONNECTION STRUCTURE BETWEEN ROTARY ELECTRIC MACHINE AND ELECTRIC POWER CONTROLLER AND MANUFACTURING METHOD OF THE SAME**

(30) Priority: 18.06.2024 JP 2024098101
(71) Applicant: MAZDA MOTOR CORPORATION, Hiroshima 730-8670 (JP)
(72) Inventor: Koumoto, Masaaki, 730-8670 Aki-gun, Hiroshima (JP); Uchise, Hideaki, 730-8670 Aki-gun, Hiroshima (JP); Kawasaki, Shota, 730-8670 Aki-gun, Hiroshima (JP); Tsukishita, Yuki, 730-8670 Aki-gun, Hiroshima (JP)
(74) Representative: Lorenz Seidler Gossel Part. mbB

(57) **Abstract**

To compactly absorb an assembly error that occurs when a rotary electric machine is assembled to a body to be assembled, the wiring connection structure includes the rotary electric machine and an electric power controller. The rotary electric machine has a rotary electric machine side terminal block that holds a rotary electric machine side terminal. The electric power controller includes an electric power controller side terminal block that holds an electric power controller side terminal. The electric power controller side terminal block includes: a fixed portion fixed to a fixing surface of a casing in the rotary electric machine or the electric power controller by a fixture; and a columnar insertion portion extending from the fixed portion toward the rotary electric machine side terminal block and inserted in an insertion hole provided to the fixing surface. The rotary electric machine side terminal extends toward an insertion portion of the electric power controller side terminal block. The electric power controller side terminal extends toward the rotary electric machine side terminal block. The rotary electric machine side terminal and the electric power controller side terminal are fastened by a fastener in a fastening direction crossing an insertion direction by the insertion portion. A seal member formed of an elastic body is provided in a clearance between an outer circumferential surface of the insertion portion and an inner circumferential surface of the insertion hole.

## Description

The present disclosure relates to a wiring connection structure between a rotary electric machine and an electric power controller and a manufacturing method of the same.

A technique of controlling electric power, which is applied to a rotary electric machine, by an electric power controller has been known. The rotary electric machine and the electric power controller are electrically connected via wiring. The rotary electric machine has a rotary electric machine side terminal block that holds a rotary electric machine side terminal constituting the wiring. The electric power controller has an electric power controller side terminal block that holds an electric power controller side terminal constituting the wiring.

The electric power controller side terminal block is fixed to a fixing surface of a casing for the rotary electric machine or the electric power controller via a fixture. A hole is provided in the fixing surface of the casing. The electric power controller side terminal, which is held by the electric power controller side terminal block, extends to the rotary electric machine side terminal, which is held by the rotary electric machine side terminal block, through the hole provided in the fixing surface of the casing.

The rotary electric machine side terminal and the electric power controller side terminal are each formed by a plate-shaped bus bar and are connected to each other by being fastened by a fastener.

Here, a plane seal is usually provided between the electric power controller side terminal block and the fixing surface of the casing (for the rotary electric machine or the electric power controller).

As described in JP2008-301544A, for example, the plane seal is formed in a planar shape that extends in parallel along the fixing surface.

By the way, when it is attempted to assemble the rotary electric machine to a body to be assembled such as a vehicle, an assembly error occurs. Such an assembly error causes connection failure between the rotary electric machine side terminal and the electric power controller side terminal (that are fastened to each other by the fastener) and thus is not preferable. Thus, the assembly error has to be somewhat absorbed.

When the wiring is formed by a wire, the assembly error can be absorbed by deformation of the soft wire. However, when the wiring is formed of the plate-shaped bus bar, it is difficult to absorb the assembly error by deformation of the bus bar due to unlikeliness of deformation of the hard bus bar. In order to absorb the assembly error, it is considered to extend the bus bar to promote the deformation thereof. However, since the wiring becomes too long, it is not preferred from a viewpoint of electric conductivity.

Thus, a method for absorbing the assembly error by appropriately adjusting a position of the electric power controller side terminal block with respect to the fixing surface of the casing (for the rotary electric machine or the electric power controller) is considered.

However, in the case where the plane seal as in Patent Literature 1 is provided between the electric power controller side terminal block and the fixing surface of the casing, the fixture for fixing the electric power controller side terminal block to the fixing surface of the casing has to be arranged on an outer side of the plane seal. In this case, a fixing structure between the electric power controller side terminal block and the casing (for the rotary electric machine or the electric power controller) is enlarged.

This problem also applies when the rotary electric machine is assembled to the body to be assembled other than the vehicle.

An object of the present disclosure is to provide a wiring connection structure between a rotary electric machine and an electric power controller, the compact wiring connection structure capable of absorbing an assembly error that occurs when the rotary electric machine is assembled to a body to be assembled.

A wiring connection structure between a rotary electric machine and an electric power controller according to the present disclosure includes the rotary electric machine and the electric power controller that is electrically connected to the rotary electric machine via a wire and controls electric power applied to the rotary electric machine, in which the rotary electric machine has a rotary electric machine side terminal block that holds a rotary electric machine side terminal constituting the wire, the electric power controller has an electric power controller side terminal block that holds an electric power controller side terminal constituting the wire, the electric power controller side terminal block includes: a fixed portion that is fixed to a fixing surface of a casing in the rotary electric machine or the electric power controller by a fixture; and a columnar insertion portion that extends from the fixed portion to the rotary electric machine side terminal block and is inserted in an insertion hole provided in the fixing surface, the rotary electric machine side terminal is formed of a plate-shaped bus bar and extends toward the insertion portion of the electric power controller side terminal block, the electric power controller side terminal is formed of a plate-shaped bus bar and extends toward the rotary electric machine side terminal block, the rotary electric machine side terminal and the electric power controller side terminal are connected to each other when being fastened by a fastener in a fastening direction that crosses an insertion direction by the insertion portion, and a seal member that is formed of an elastic body is provided in a clearance between an outer circumferential surface of the insertion portion and an inner circumferential surface of the insertion hole.

When the rotary electric machine is assembled to the body to be assembled, an assembly error occurs. Such an assembly error causes connection failure between the rotary electric machine side terminal and the electric power controller side terminal and thus is not preferable. For this reason, the assembly error has to be absorbed somewhere.

The rotary electric machine side terminal and the electric power controller side terminal are formed of the plate-shaped bus bars and thus are less likely to be deformed. It is difficult to sufficiently absorb the assembly error by the deformation of the bus bar. In order to absorb the assembly error, it is considered to extend the bus bar to promote the deformation thereof. However, since the wiring becomes too long, it is not preferred from a viewpoint of electric conductivity.

Here, the fixed portion of the electric power controller side terminal block is fixed to the fixing surface of the casing (for the rotary electric machine or the electric power controller) by the fixture. The columnar insertion portion in the electric power controller side terminal block extends from the fixed portion toward the rotary electric machine side terminal block, and is inserted in the insertion hole that is provided in the fixing surface of the casing. The rotary electric machine side terminal and the electric power controller side terminal are connected to each other when being fastened by the fastener in the fastening direction that crosses the insertion direction by the insertion portion of the electric power controller side terminal block.

The seal member that is formed of the elastic body is provided in the clearance between the outer circumferential surface of the insertion portion of the electric power controller side terminal block and the inner circumferential surface of the insertion hole of the casing. The fixed portion of the electric power controller side terminal block can move along the fixing surface of the casing by elastic deformation of the seal member in the fastening direction that crosses the insertion direction by the insertion portion, before being fixed to the fixing surface of the casing by the fixture.

When the fixed portion of the electric power controller side terminal block moves along the fixing surface of casing, the assembly error can be absorbed in the fastening direction that crosses the insertion direction. After the assembly error is absorbed, the fixed portion of the electric power controller side terminal block may be fixed to the fixing surface of the casing by the fixture.

A plane seal is not provided between the fixed portion of the electric power controller side terminal block and the fixing surface of the casing, but the seal member is provided in the clearance between the outer circumferential surface of the insertion portion of the electric power controller side terminal block and the inner circumferential surface of the insertion hole of the casing.

Since the plane seal is not employed, the fixture for fixing the fixed portion of the electric power controller side terminal block to the fixing surface of the casing does not have to be arranged outside the plane seal.

Enlargement of a fixing structure between the electric power controller side terminal block and the casing (for the rotary electric machine or the electric power controller) can be suppressed.

As it has been described so far, it is possible to provide the wiring connection structure between the rotary electric machine and the electric power controller, the wiring connection structure being able to compactly absorb the assembly error that occurs when the rotary electric machine is assembled to the body to be assembled.

In an embodiment, a connection surface of the rotary electric machine side terminal and a connection surface of the electric power controller side terminal extend in parallel to each other in the insertion direction.

By relative movement between the connection surface of the rotary electric machine side terminal and the connection surface of the electric power controller side terminal in the insertion direction, it is possible to easily absorb the assembly error in the insertion direction therebetween.

In an embodiment, the rotary electric machine side terminal block has a columnar guide portion that extends toward the insertion portion and holds the rotary electric machine side terminal, the electric power controller side terminal protrudes from the insertion portion toward the guide portion, and the guide portion is inclined such that at least a part thereof approaches the connection surface of the rotary electric machine side terminal in order to guide the electric power controller side terminal, which protrudes from the insertion portion toward the guide portion, to be connected to the rotary electric machine side terminal.

By guiding the electric power controller side terminal by the guide portion of the rotary electric machine side terminal block, the electric power controller side terminal can be easily positioned and connected to the rotary electric machine side terminal.

In an embodiment, the electric power controller side terminal block includes a cylindrical separate portion that is formed as a separate body from the insertion portion, the outer circumferential surface of the insertion portion is provided with a step portion whose portion on the fixed portion side has a large diameter and whose portion on an opposite side from the fixed portion has a small diameter, the separate portion is fitted to the outer circumferential surface of the insertion portion from the opposite side from the fixed portion, and the seal member is arranged in a groove portion that includes the step portion and the separate portion.

The groove portion for arranging the seal member can be easily formed in the outer circumferential surface of the insertion portion by using the separate portion.

In an embodiment, the rotary electric machine side terminal block has a columnar guide portion that extends toward the insertion portion and holds the rotary electric machine side terminal, the electric power controller side terminal protrudes from the insertion portion toward the guide portion, and, in the insertion direction, the separate portion overlaps the guide portion to accommodate the guide portion.

A dimensional increase in the insertion direction that is associated with fitting of the separate portion to the insertion portion in the electric power controller side terminal block can be suppressed by accommodating the guide portion of the rotary electric machine side terminal block in the separate portion of the electric power controller side terminal block.

In an embodiment, the fixed portion is fixed to the fixing surface by the fixture that is arranged only on one side of the insertion hole.

The fixing structure between the electric power controller side terminal block and the casing can be simplified.

In an embodiment, a thinned portion is provided around the insertion hole in the fixing surface.

It is possible to reduce weight of the casing.

In one embodiment, the rotary electric machine side terminal block includes a flow path, through which a refrigerant for cooling the rotary electric machine flows.

When the rotary electric machine is assembled to the body to be assembled, positioning of the flow path, through which the refrigerant flows, is prioritized. The position of the rotary electric machine side terminal block including the flow path is fixed and can no longer be moved. Thus, the above-described method of absorbing the assembly error by moving the fixed portion of the electric power controller side terminal block along the fixing surface of the casing is further effective.

In one embodiment, the rotary electric machine and the electric power controller are mounted on a vehicle.

It is possible to provide the wiring connection structure between the rotary electric machine and the electric power controller, the wiring connection structure being able to compactly absorb the assembly error that occurs when the rotary electric machine is assembled to a vehicle as the body to be assembled.

A method for manufacturing the wiring connection structure between the rotary electric machine and the electric power controller according to the present disclosure includes: connecting the rotary electric machine side terminal and the electric power controller side terminal to each other by being fastened by the fastener, and thereafter fixing the fixed portion to the fixing surface by the fixture.

It is possible to absorb the assembly error after the rotary electric machine side terminal and the electric power controller side terminal are connected and before the fixed portion of the electric power controller side terminal block is fixed to a fixing surface of a casing.

### [Advantageous Effects of Invention]

According to the present disclosure, it is possible to provide the wiring connection structure between the rotary electric machine and the electric power controller, the wiring connection structure being able to compactly absorb the assembly error that occurs when the rotary electric machine is assembled to the body to be assembled.

### Brief Description of Drawings:

FIG. 1 illustrates a vehicle.
FIG. 2 is a plan view in which a drive unit is viewed from above.
FIG. 3 is a front view in which the drive unit is viewed from the front.
FIG. 4 illustrates a structure of a motor.
FIG. 5 illustrates a cooling structure of the motor.
FIG. 6 illustrates an energization structure between the motor and an inverter.
FIG. 7 illustrates a wiring connection structure between the motor and the inverter.
FIG. 8 is a perspective view in which an inverter-side terminal block is viewed from above.
FIG. 9 is a perspective view in which the inverter-side terminal block is viewed from below.
FIG. 10 is a side view in which the inverter-side terminal block is viewed from a side.
FIG. 11 is a perspective view in which a motor-side terminal block is viewed from above.
FIG. 12 is a perspective view in which the motor-side terminal block is viewed from below.
FIG. 13 is a plan view in which a fixing surface of a motor block is viewed from above.

Hereinafter, an embodiment of the present disclosure will be described in detail with reference to the drawings. The following description of the preferred embodiment is merely illustrative in nature and is not intended to limit the present disclosure, application subjects thereof, or application thereof.

A wiring connection structure between a rotary electric machine and an electric power controller according to the present embodiment will be described. From a functional viewpoint, the rotary electric machine is an electric motor, a generator, or a generator motor. The rotary electric machine is suitable as a drive source of a vehicle. The rotary electric machine functions as an electrical generator (a generator) during regeneration but mainly functions as the electric motor (a motor). In this example, a description will be made on the rotary electric machine as the motor.

The electric power controller is a device that controls electric power applied to the rotary electric machine. As the electric power controller, for example, an inverter, a converter, or a combination thereof is considered. In this example, the electric power controller will be described as the inverter.

A front-rear direction, a left-right direction, and an up-down direction will be based on a vehicle 1. In each of the drawings, these directions are each indicated by an arrow. The front-rear direction corresponds to an advancing direction of the vehicle 1. The left-right direction corresponds to a vehicle width direction of the vehicle 1. The up-down direction corresponds to a height direction of the vehicle 1.

A direction in which a rotation axis J of a drive unit DU extends will be referred to as an axial direction. A direction orthogonal to the rotation axis J will be referred to as a radial direction. An outer side in a radial direction will be referred to as an outer circumferential side. An inner side in the radial direction will be referred to as an inner circumferential side. A rotational direction of the rotation axis J and an opposite direction thereto will each be referred to as a circumferential direction.

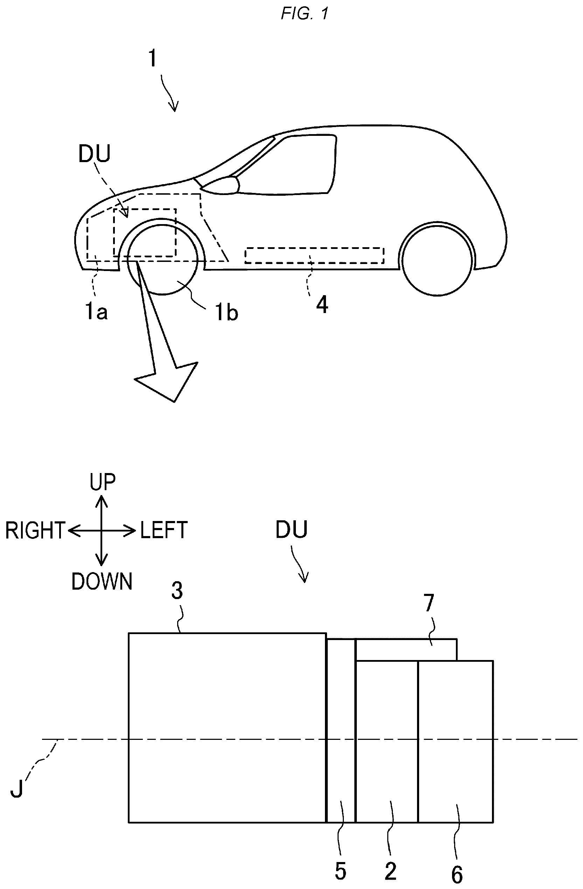

FIG. 1 illustrates the vehicle 1. The vehicle 1 is an example of a body to be assembled to which the rotary electric machine is assembled. The vehicle 1 is a so-called hybrid vehicle. The vehicle 1 includes a motor 2, an engine 3, a battery 4, a joint 5, a transmission 6, and an inverter 7.

The motor 2, the engine 3, the joint 5, and the transmission 6 are integrally assembled and constitute the drive unit DU. The drive unit DU is mounted in a front compartment 1a of the vehicle 1. The drive unit DU rotationally drives left and right front wheels 1b. The vehicle 1 is a so-called FF vehicle.

The drive unit DU is transversely arranged in the vehicle 1 such that the rotation axis J thereof extends in the vehicle width direction (the left-right direction). The engine 3 is an in-line, cylinder reciprocating engine. A type and performance of the engine 3 can be selected appropriately.

The battery 4 is mounted under a floor panel of the vehicle 1. The battery 4 has a high voltage and large capacity and functions as a power source of the motor 2.

The drive unit DU includes the joint 5 and the transmission 6 together with the motor 2 and the engine 3. The motor 2 is electrically connected to the battery 4 via the inverter 7. Under control of the inverter 7, the motor 2 is driven by electric power that is input from the battery 4.

During travel of the vehicle 1 by driving of the motor 2, the inverter 7 converts DC power of the battery 4 into AC power of three phases (a U phase, a V phase, and a W phase) including different phases, and inputs the AC power to the motor 2. Consequently, the motor 2 rotates.

During the regeneration that is associated with deceleration of the vehicle 1, the inverter 7 converts the AC power generated by the motor 2 into the DC power, and outputs the DC power to the battery 4.

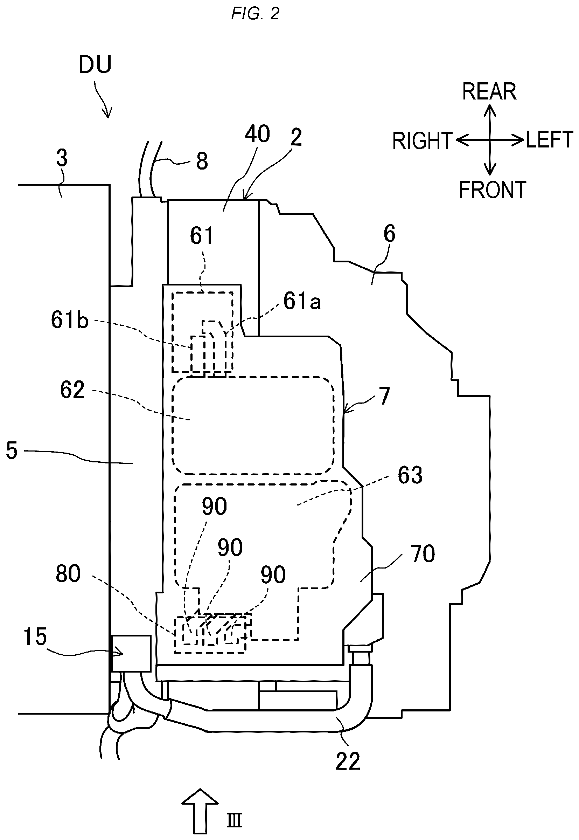

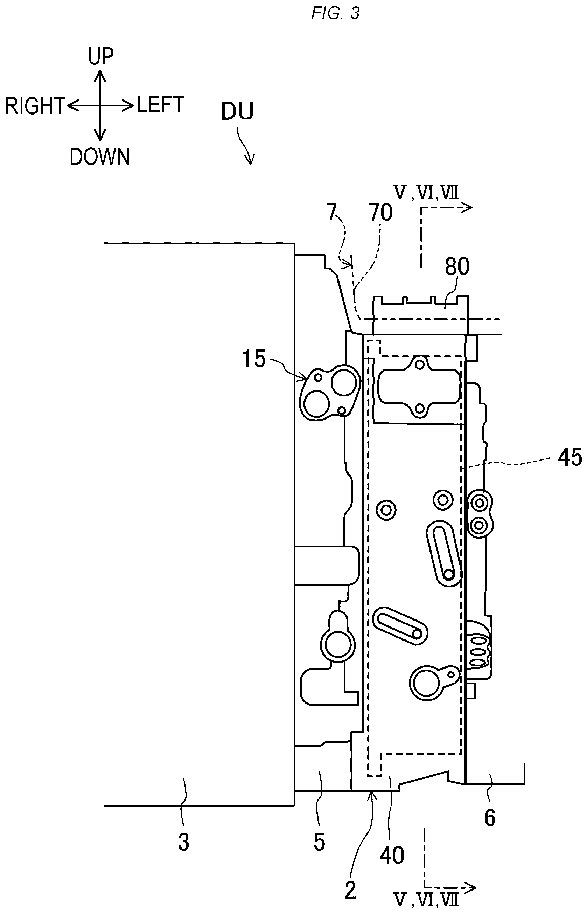

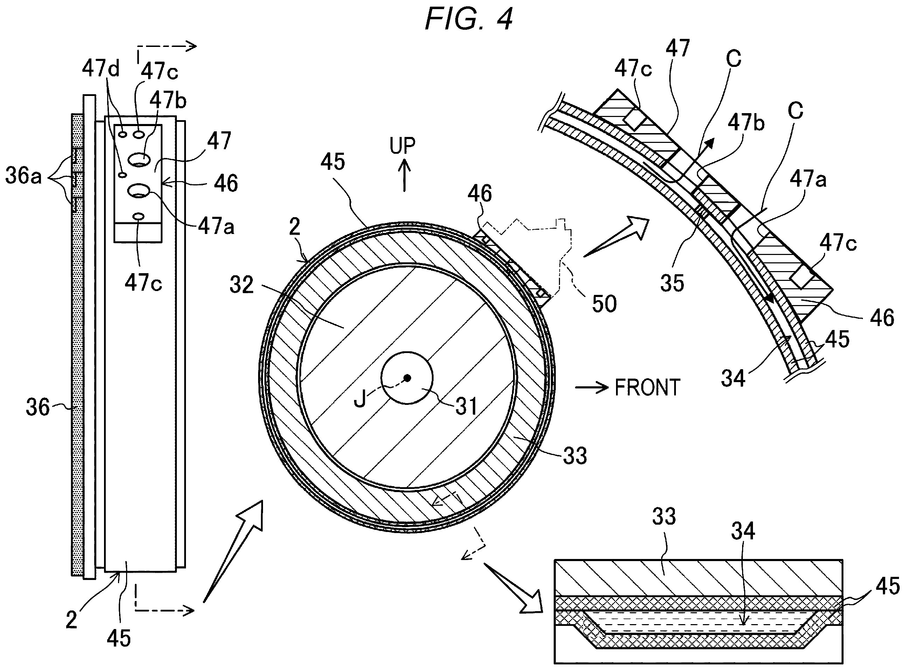

FIG. 2 is a plan view in which the drive unit DU is viewed from above. FIG. 3 is a front view in which the drive unit DU is viewed from the front (in a direction of line III). FIG. 4 illustrates a structure of the motor 2. As illustrated in FIGS. 2 and 3, the drive unit DU is configured by integrally assembling the motor 2, the engine 3, the joint 5, and the transmission 6.

The motor 2 includes a shaft 31, a rotor 32, a stator 33, a motor block 40, a motor housing 45, and a motor-side terminal block 50.

As illustrated in FIG. 4, the motor 2 is a three-phase permanent magnet synchronous motor, for example. The shaft 31 extends in the axial direction. The rotor 32 is formed of a columnar member that includes a permanent magnet. Although not illustrated, magnetic poles including an N pole and an S pole are alternately provided in an outer circumferential portion of the rotor 32. The shaft 31 and the rotor 32 are coaxially fixed with the rotation axis J being a center.

The stator 33 is formed of a cylindrical member. The stator 33 is arranged coaxially with the rotor 32. An air gap is provided between the rotor 32 and the stator 33. Although not illustrated, the stator 33 includes a steel core and a three-phase coil group of a U-phase, a V-phase, and a W-phase, each of which is configured by winding a copper wire around the core.

As illustrated in FIGS. 2 and 3, the motor block 40 is formed in a substantially rectangular parallelepiped block shape. In detail, the motor block 40 is formed in a substantially square box shape and has a cavity formed therein.

The motor housing 45 is formed as a cylindrical metal container that has a circular cross section and extends in the axial direction. The motor housing 45 is accommodated in the motor block 40.

As illustrated in FIG. 4, the shaft 31, the rotor 32, and the stator 33 are accommodated in the motor housing 45. The shaft 31 is rotatably supported by the motor housing 45. The shaft 31 extends horizontally in the vehicle width direction (the left-right direction) in a manner to coincide with the rotation axis J.

As illustrated in FIGS. 2 and 3, a right end portion of the shaft 31 is coupled to a crankshaft of the engine 3 via the joint 5. A left end portion of the shaft 31 is coupled to the transmission 6.

As illustrated in FIG. 4, an outer circumferential surface of the stator 33 is in close contact with an inner circumferential surface of the motor housing 45. During operation of the motor 2, a large current flows through the stator 33. At the time, the stator 33 generates heat due to copper loss and iron loss. In order to cool the stator 33, a stator cooling flow path 34 is formed between the inner circumferential surface of the motor housing 45 and the outer circumferential surface of the stator 33. The stator cooling flow path 34 is a belt-shaped flow path through which a refrigerant C flows, and extends over an entire circumference of the motor housing 45 with a large width.

When viewed in the axial direction, an attachment base 46 is arranged obliquely on an upper front side of the motor housing 45. The attachment base 46 has a flat attachment surface 47 that faces obliquely upward to the front. The attachment base 46 is formed in a rectangular shape that extends in a tangential direction of the motor housing 45. An inlet 47a and an outlet 47b are formed in the attachment surface 47. The inlet 47a and the outlet 47b are adjacent to each other in the circumferential direction. The inlet 47a and the outlet 47b communicate with the stator cooling flow path 34. Two fastening holes 47c and two positioning holes 47d are formed in the attachment surface 47.

A partition wall 35 is provided in a portion of the stator cooling flow path 34 that opposes the attachment base 46. The partition wall 35 is arranged between the inlet 47a and the outlet 47b. The stator cooling flow path 34 is divided by the partition wall 35. The refrigerant C that is introduced into the stator cooling flow path 34 through the inlet 47a flows circumferentially through the stator cooling flow path 34, and is then led out to the outside through the outlet 47b.

The stator 33 is provided with three coil coupling bus bars 36 in a manner to correspond to respective phases of the U-phase, the V-phase, and the W-phase. The coil coupling bus bar 36 has an annular shape or an arcuate shape. The coil coupling bus bar 36 has a plate shape. The coil coupling bus bars 36 are electrically connected to the coil group of the respective phases in the stator 33. A connection piece 36a is provided in a portion of the coil coupling bus bar 36 that opposes the attachment base 46.

The motor-side terminal block 50 will be described below.

The motor 2 is electrically connected to the battery 4 via the inverter 7. As illustrated in FIG. 2, the inverter 7 includes a DC-side connector 61, a smoothing capacitor 62, a control board 63, an inverter case 70, and an inverter-side terminal block 80.

As illustrated in FIG. 2, the DC-side connector 61 includes a positive bus bar 61a and a negative bus bar 61b. The positive bus bar 61a and the negative bus bar 61b are connected to the control board 63 via the smoothing capacitor 62. The DC-side connector 61 is electrically connected to the battery 4 via the cable 8. The smoothing capacitor 62 smooths the electric power.

A power-based semiconductor such as an IGBT or a MOSFET is mounted on the control board 63. The control board 63 includes an inverter circuit. The control board 63 controls the electric power that is input/output to/from the motor 2.

The inverter case 70 accommodates the DC-side connector 61, the smoothing capacitor 62, and the control board 63. The inverter case 70 has a flat shape that has a small thickness in the up-down direction and expands in the front-rear direction and the left-right direction. The inverter case 70 is fastened and attached to an upper portion of the drive unit DU in a manner to be provided across the rotation axis J.

The inverter-side terminal block 80 constitutes an AC-side connector. The inverter-side terminal block 80 holds three inverter-side bus bars 90 that correspond to the respective phases of the U-phase, the V-phase, and the W-phase. The inverter-side bus bar 90 has a plate shape. One end of the inverter-side bus bar 90 is connected to the control board 63. The other end of the inverter-side bus bar 90 is connected to a motor-side bus bar 100 in the motor-side terminal block 50, which will be described below.

The inverter 7 is electrically connected to the motor 2 via the inverter-side terminal block 80 and the motor-side terminal block 50. The electric power from the battery 4 is converted from the DC power into the AC power by the inverter 7 and is then supplied to the motor 2.

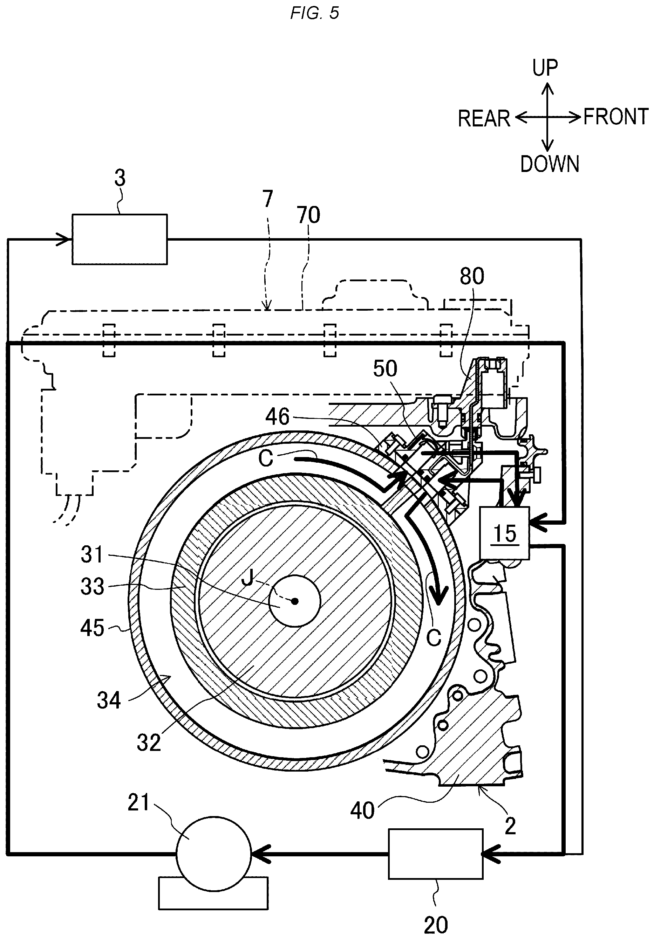

The inverter-side terminal block 80 is arranged in a front portion of an upper surface of the motor block 40. An upper portion of the inverter-side terminal block 80 is located in the inverter case 70, and a lower portion of the inverter-side terminal block 80 is located in the motor block 40 (see FIG. 5). Details of the inverter-side terminal block 80 will be described below.

FIG. 5 is a cross-sectional view of a cooling structure of the motor 2 that is taken along line V. The vehicle 1 includes a circulation system for the refrigerant C. The circulation system is provided mainly for cooling the engine 3. In this example, cooling water for cooling the engine is also used as the refrigerant C. However, the refrigerant C is not limited to water and may be oil or the like, and a type thereof is not limited.

The vehicle 1 includes a heat exchanger 20 and a water pump 21. The heat exchanger 20 is arranged in a front portion of the vehicle 1 and cools the refrigerant C with air. The water pump 21 is operated by the power of the drive unit DU or the electric power. The refrigerant C that has been cooled in the heat exchanger 20 is delivered to the engine 3 and the inverter 7 by the water pump 21.

Although not illustrated, the inverter 7 is provided with a cooling passage for cooling electrical components that are accommodated therein. The refrigerant C that has cooled the inverter 7 flows through a pipe 22 (see FIG. 2) and is introduced into a flow path coupling mechanism 15 that is provided in a front portion of the drive unit DU. Although not illustrated, the flow path coupling mechanism 15 includes a coupling flow path, a joint pipe, and the like.

The refrigerant C that has been introduced into the flow path coupling mechanism 15 is introduced into the stator cooling flow path 34 of the motor 2 via the motor-side terminal block 50. The stator cooling flow path 34 is provided between the stator 33 and the motor housing 45 in the motor 2. The refrigerant C that has been introduced into the stator cooling flow path 34 circulates circumferentially through the stator cooling flow path 34 and exchanges heat with the stator 33. Due to the heat exchange between the refrigerant C and the stator 33, the refrigerant C is heated, and the stator 33 is cooled. The refrigerant C that has circulated through the stator cooling flow path 34 is delivered to the heat exchanger 20 via the flow path coupling mechanism 15. In the heat exchanger 20, the refrigerant C is cooled by performing the heat exchange with outside air.

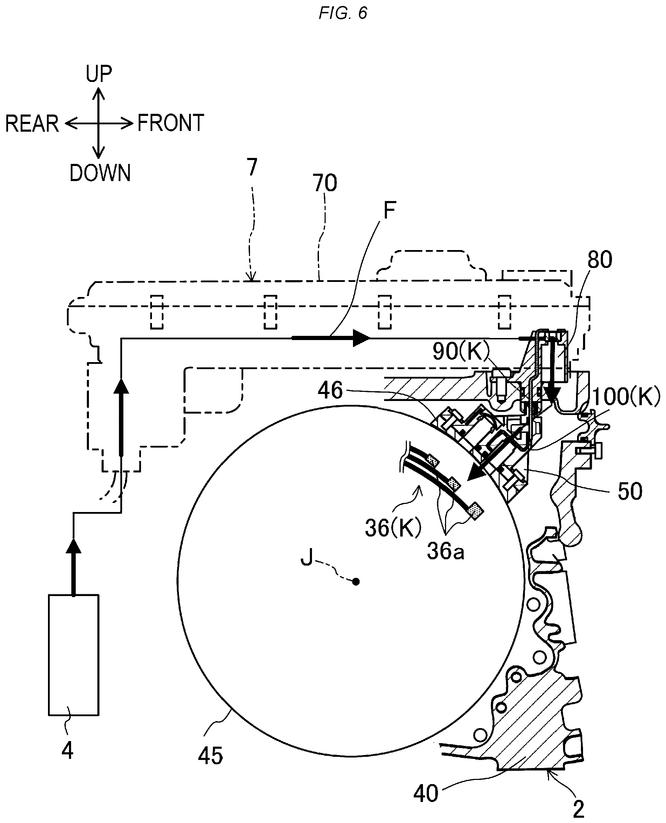

FIG. 6 is a cross-sectional view of an energization structure of the motor 2 and the inverter 7 that is taken along line VI. As described above, the inverter-side terminal block 80 holds the three inverter-side bus bars 90 that correspond to the respective phases of the U-phase, the V-phase, and the W-phase. Meanwhile, the motor-side terminal block 50 holds the three motor-side bus bars 100 that correspond to the respective phases of the U-phase, the V-phase, and the W-phase. The motor-side bus bar 100 has a plate shape.

One end of the motor-side bus bar 100 in the motor-side terminal block 50 is connected to the other end of the inverter-side bus bar 90 in the inverter-side terminal block 80. The other end of the motor-side bus bar 100 in the motor-side terminal block 50 is connected to the coil coupling bus bar 36 in the stator 33. The motor-side bus bar 100 of the motor-side terminal block 50 and the inverter-side bus bar 90 of the inverter-side terminal block 80 are electrically connected to each other.

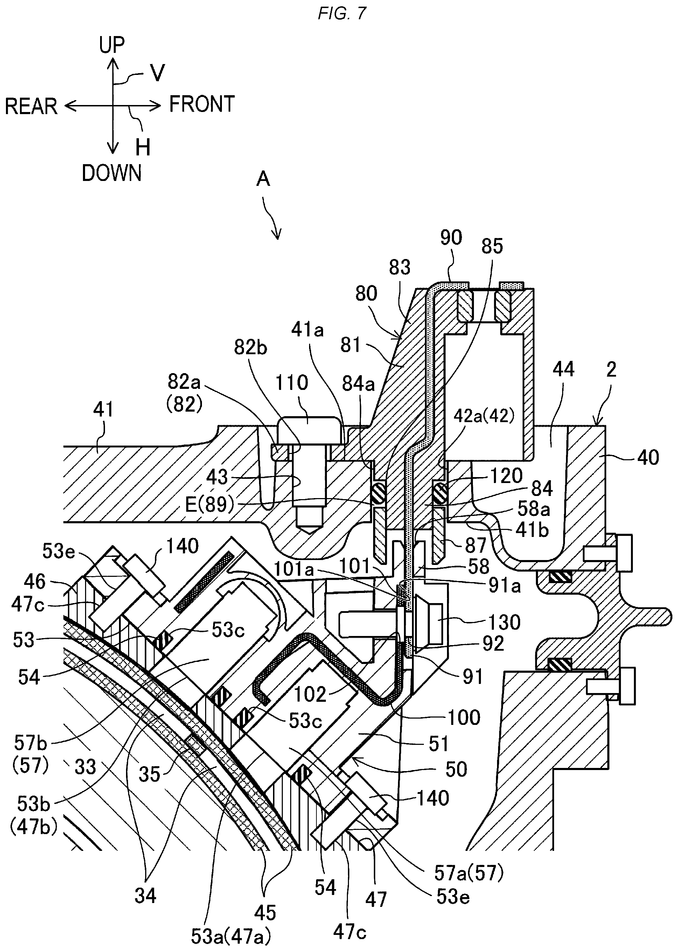

FIG. 7 is a cross-sectional view of a wiring connection structure A between the motor 2 and the inverter 7 that is taken along line VII. The motor 2 is an example of the rotary electric machine. The inverter 7 is an example of the electric power controller. The wiring connection structure A includes the motor 2 and the inverter 7. The motor 2 has the motor-side terminal block 50. The motor-side terminal block 50 is an example of the rotary electric machine side terminal block. The inverter 7 has the inverter-side terminal block 80. The inverter-side terminal block 80 is an example of the electric power controller side terminal block.

The inverter 7 is electrically connected to the motor 2 via a wire K, and controls electric power F that is applied to the motor 2 (see FIG. 6). The wire K includes the inverter-side bus bar 90, the motor-side bus bar 100, and the coil coupling bus bar 36. The inverter-side bus bar 90 has a plate shape. The motor-side bus bar 100 has the plate shape. The coil coupling bus bar 36 has a plate shape. The motor 2 and the inverter 7 are mounted on the vehicle 1.

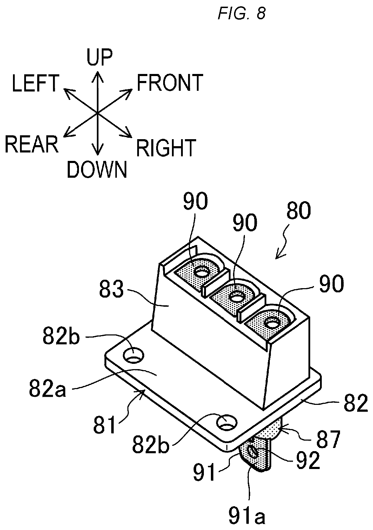

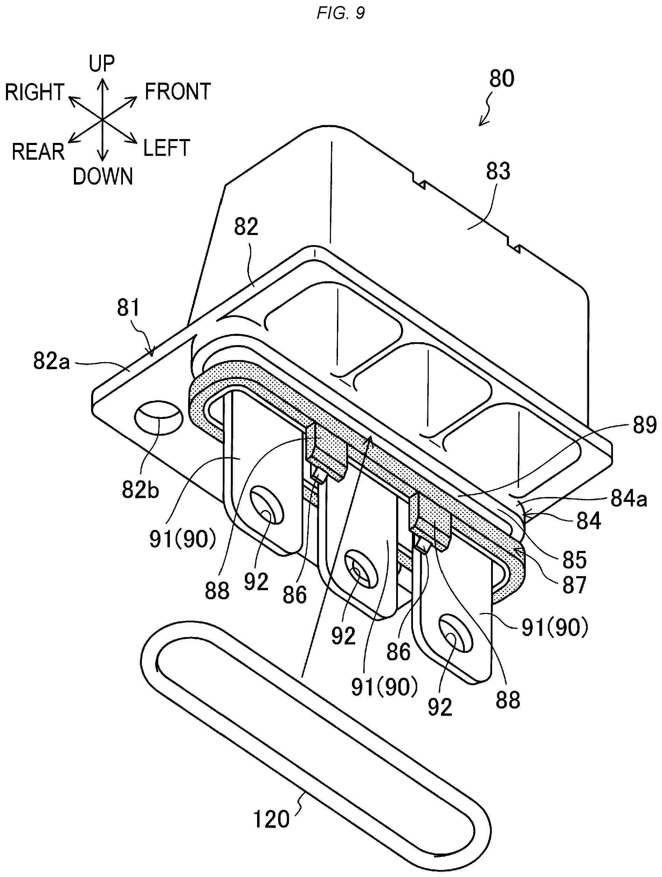

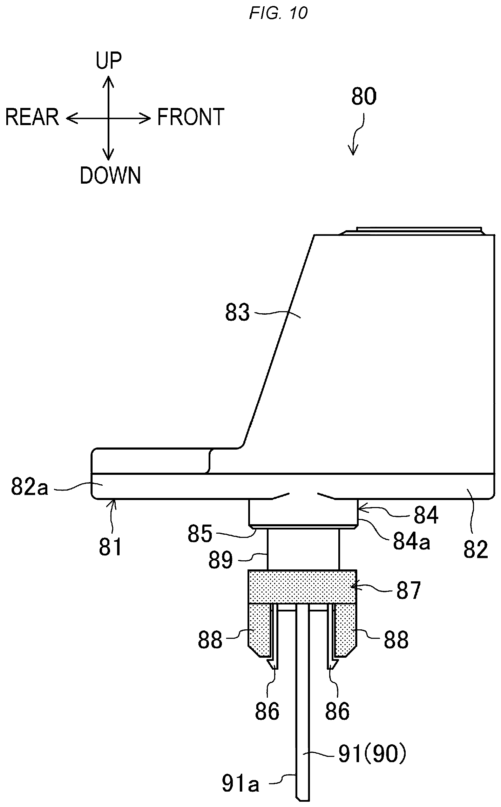

The inverter-side terminal block 80 will be described with reference to FIGS. 7 to 10. FIG. 8 is a perspective view in which the inverter-side terminal block 80 is viewed from above. FIG. 9 is a perspective view in which the inverter-side terminal block 80 is viewed from below. FIG. 10 is a side view in which the inverter-side terminal block 80 is viewed from a side.

The inverter-side terminal block 80 is arranged above the motor-side terminal block 50. The motor-side terminal block 50 is arranged below the inverter-side terminal block 80. The inverter-side terminal block 80 is made of a resin. The inverter-side terminal block 80 is formed by injection molding (in detail, molding).

The inverter-side terminal block 80 includes a fixed portion 81, an insertion portion 84, and a separate portion 87. Furthermore, the fixed portion 81 includes a base portion 82 and a vertically extending portion 83. The base portion 82 has a plate shape in which the up-down direction is set as a thickness direction, and extends longitudinally in the left-right direction and shortly in the front-rear direction. The vertically extending portion 83 is provided in a front end portion of an upper surface of the base portion 82. The vertically extending portion 83 is formed in a substantially quadrangular columnar shape that extends in the up-down direction. When seen in the up-down direction, the vertically extending portion 83 is formed to be long in the left-right direction and short in the front-rear direction.

A portion of the base portion 82 that bulges rearward from a lower end portion of the vertically extending portion 83 constitutes a flange 82a. The flange 82a is arranged behind the vertically extending portion 83. The flange 82a is provided with two through holes 82b. The through holes 82b penetrate the flange 82a in the up-down direction. The two through holes 82b are arranged side by side at intervals in the left-right direction. The through holes 82b are arranged only on a rear side of the vertically extending portion 83. The through hole 82b does not exist on a front side of the vertically extending portion 83. The through holes 82b allow fixtures 110, which will be described below, to pass therethrough in the up-down direction.

The insertion portion 84 is provided in a portion of a lower surface of the base portion 82 of the fixed portion 81, the portion opposing the vertically extending portion 83. The insertion portion 84 is formed in a substantially quadrangular columnar shape. The insertion portion 84 extends in the up-down direction. When seen in the up-down direction, the insertion portion 84 is formed to be long in the left-right direction and short in the front-rear direction.

The fixed portion 81 is arranged above the insertion portion 84. The insertion portion 84 is arranged below the fixed portion 81. The insertion portion 84 extends downward from the fixed portion 81 toward the motor-side terminal block 50 (see FIG. 7).

A step portion 85 is provided on an outer circumferential surface 84a of the insertion portion 84. The outer circumferential surface 84a faces the front-rear direction and the left-right direction. In the outer circumferential surface 84a of the insertion portion 84, an upper side of the step portion 85 has a large diameter, and a lower side thereof has a small diameter. That is, in the outer circumferential surface 84a of the insertion portion 84, a portion of the step portion 85 on the fixed portion 81 side has a large diameter, and a portion thereof on an opposite side from the fixed portion 81 (the motor-side terminal block 50 side) has a small diameter.

Insertion portion-side engagement pieces 86 are provided in a lower end portion and both end portions in the front-rear direction of the insertion portion 84. A total of the four insertion portion-side engagement pieces 86 are provided, two on the front side and two on the rear side. When only one side of the front side and the rear side is viewed, the two insertion portion-side engagement pieces 86 are arranged side by side in an intermediate portion in the left-right direction. The insertion portion-side engagement piece 86 extends downward.

The separate portion 87 is formed as a separate body from the insertion portion 84. The separate portion 87 is formed in a substantially quadrangular cylindrical shape. The separate portion 87 extends in the up-down direction. When seen in the up-down direction, the separate portion 87 is formed to be long in the left-right direction and short in the front-rear direction. The separate portion 87 is fitted to the outer circumferential surface 84a of the insertion portion 84 from below. That is, the separate portion 87 is fitted to the outer circumferential surface 84a of the insertion portion 84 from an opposite side to the fixed portion 81 (the motor-side terminal block 50 side). The separate portion 87 constitutes a lower end portion of the inverter-side terminal block 80.

Separate portion side engagement pieces 88 are provided in a lower end portion and both end portions in the front-rear direction of the separate portion 87. A total of the four separate portion side engagement pieces 88 that are two on the front side and two on the rear side are provided in a manner to correspond to the insertion portion-side engagement pieces 86. The separate portion side engagement piece 88 extends downward. The separate portion side engagement piece 88 is arranged on the outer side of the insertion portion-side engagement piece 86 in the front-rear direction, and overlaps it in the up-down direction. The separate portion side engagement piece 88 is engaged with the insertion portion-side engagement piece 86.

The step portion 85 in the outer circumferential surface 84a of the insertion portion 84 and the separate portion 87 constitute a groove portion 89. A seal member 120, which will be described below, is arranged in the groove portion 89. The groove portion 89 is formed in a groove shape that extends in the left-right direction and the front-rear direction and makes a circle.

The inverter-side terminal block 80 holds the three inverter-side bus bars 90 that correspond to the respective phases of the U-phase, the V-phase, and the W-phase. The three inverter-side bus bars 90 are arranged side by side in the left-right direction. The inverter-side bus bars 90 are each made of metal. The adjacent inverter-side bus bars 90 are insulated from each other by the resin.

The inverter-side bus bar 90 is bent in an inverted L-shape. The inverter-side bus bar 90 extends rearward, is then curved, and extends downward. A lower end portion of the inverter-side bus bar 90 is an inverter-side terminal 91 that protrudes downward from the lower end portion of the inverter-side terminal block 80 (a lower end portion of the separate portion 87).

The inverter-side terminal 91 is an example of the electric power controller side terminal. The inverter-side terminal 91 is formed by a lower end portion of the plate-shaped inverter-side bus bar 90. The inverter-side terminal 91 constitutes the wire K. The insertion portion 84 of the inverter-side terminal block 80 holds the inverter-side terminal 91. The inverter-side terminal 91 extends downward toward the motor-side terminal block 50. In detail, the inverter-side terminal 91 protrudes downward from the insertion portion 84 of the inverter-side terminal block 80 toward the motor-side terminal block 50.

### (Motor-Side Terminal Block)

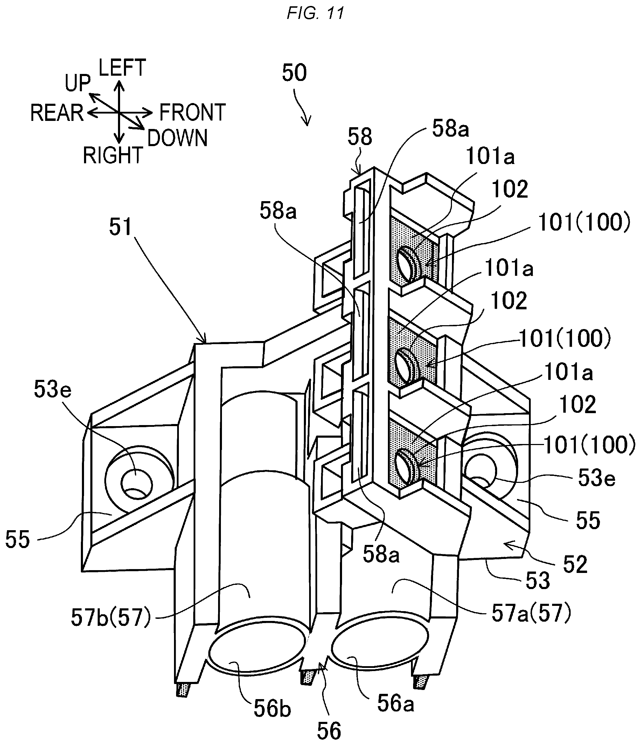

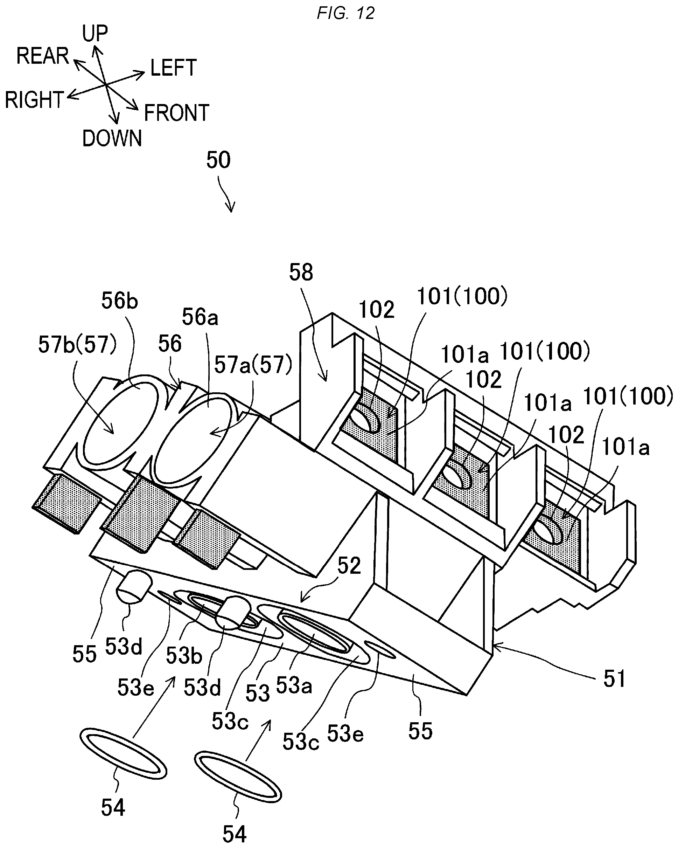

The motor-side terminal block 50 will be described with reference to FIGS. 7, 11, and 12. FIG. 11 is a perspective view in which the motor-side terminal block 50 is viewed from above. FIG. 12 is a perspective view in which the motor-side terminal block 50 is viewed from below.

The motor-side terminal block 50 is manufactured by injection molding (specifically, molding) of the resin. The motor-side terminal block 50 not only has a function to relay the flow of the electric power between the inverter 7 and the motor 2, but also has a function to relay the flow of the refrigerant C between the flow path coupling mechanism 15 and the motor 2. The motor-side terminal block 50 includes a resin structure 51, an attachment portion 52, a connection portion 56, a terminal block side flow path 57, and a guide portion 58.

The resin structure 51 is made of an insulating resin. The resin structure 51 is formed by injection molding of the resin. The resin structure 51 is formed by solidifying the molten insulating resin into a predetermined shape.

In the motor-side terminal block 50, the attachment portion 52 is formed in a lower portion of the resin structure 51. The attachment portion 52 of the motor-side terminal block 50 is attached to the attachment base 46 of the motor housing 45. The attachment portion 52 includes an attachment surface 53.

The attachment surface 53 of the motor-side terminal block 50 faces downward and is joined to the attachment surface 47 of the motor housing 45. On the attachment surface 53 of the motor-side terminal block 50, an outlet 53a and an inlet 53b are opened. The outlet 53a and the inlet 53b in the attachment surface 53 of the motor-side terminal block 50 respectively correspond to the inlet 47a and the outlet 47b in the attachment surface 47 of the motor housing 45, and each communicate with the stator cooling flow path 34.

On the attachment surface 53 of the motor-side terminal block 50, an O-ring groove 53c is provided around each of the outlet 53a and the inlet 53b. The O-ring groove 53c is provided to attach an O-ring 54. The O-ring 54 is provided to prevent liquid leakage.

Two positioning projections 53d are provided on the attachment surface 53 of the motor-side terminal block 50. The two positioning projections 53d on the attachment surface 53 of the motor-side terminal block 50 correspond to the two positioning holes 47d in the attachment surface 47 of the motor housing 45.

In the motor-side terminal block 50, paired flange portions 55, each of which protrudes outward in the front-rear direction, are provided at both end portions in the front-rear direction in a lower portion of the resin structure 51. The flange portion 55 is formed in a plate shape having the up-down direction as a thickness direction. An upper surface of the flange portion 55 is exposed. A lower surface of the flange portion 55 is each end portion of the attachment surface 53 in the front-rear direction.

Two fastening holes 53e are provided in the attachment surface 53 as the lower surface of the flange portion 55. The two fastening holes 53e in the attachment surface 53 of the flange portion 55 of the motor-side terminal block 50 correspond to the two fastening holes 47c in the attachment surface 47 of the motor housing 45. The fastening hole 53e penetrates the flange portion 55 in the up-down direction. A fastener 140 (see FIG. 7) such as a bolt is inserted through the fastening hole 53e.

In the motor-side terminal block 50, the connection portion 56 is formed in a right portion of the resin structure 51. The connection portion 56 of the motor-side terminal block 50 is connected to the flow path coupling mechanism 15. In the connection portion 56 of the motor-side terminal block 50, an inflow port 56a and an outflow port 56b are opened. The inflow port 56a and the outflow port 56b in the connection portion 56 of the motor-side terminal block 50 communicate with the flow path coupling mechanism 15. At the inflow port 56a, the refrigerant C flows from the flow path coupling mechanism 15 into the motor-side terminal block 50. At the outflow port 56b, the refrigerant C flows out from the motor-side terminal block 50 to the flow path coupling mechanism 15.

The terminal block side flow path 57 is an example of the flow path. The terminal block side flow path 57 is a cavity that is provided in the resin structure 51 of the motor-side terminal block 50. The refrigerant C flows through the terminal block side flow path 57. The refrigerant C is provided to cool the stator 33 of the motor 2 (and the motor-side bus bar 100 of the motor-side terminal block 50).

The terminal block side flow path 57 includes a first terminal block side flow path 57a and a second terminal block-side flow path 57b. The first terminal block side flow path 57a includes the inflow port 56a and the outlet 53a. The second terminal block side flow path 57b includes the outflow port 56b and the inlet 53b. The refrigerant C flows from the flow path coupling mechanism 15 to the stator cooling flow path 34 through the first terminal block side flow path 57a of the motor-side terminal block 50. The refrigerant C flows from the stator cooling flow path 34 to the flow path coupling mechanism 15 through the second terminal block side flow path 57b of the motor-side terminal block 50.

In the motor-side terminal block 50, the guide portion 58 is provided in an upper portion of the resin structure 51. The guide portion 58 is formed in a substantially quadrangular columnar shape. The guide portion 58 extends in the up-down direction. When seen in the up-down direction, the guide portion 58 is formed to be long in the left-right direction and short in the front-rear direction. An upper end portion of the guide portion 58 constitutes an upper end portion of the resin structure 51 of the motor-side terminal block 50.

The guide portion 58 of the motor-side terminal block 50 is arranged below the insertion portion 84 of the inverter-side terminal block 80. The guide portion 58 of the motor-side terminal block 50 extends upward toward the insertion portion 84 of the inverter-side terminal block 80 so as to face the insertion portion 84 of the inverter-side terminal block 80. On the contrary, the insertion portion 84 of the inverter-side terminal block 80 extends downward from the fixed portion 81 of the inverter-side terminal block 80 toward the guide portion 58 of the motor-side terminal block 50.

The resin structure 51 of the motor-side terminal block 50 holds the three motor-side bus bars 100 that correspond to the respective phases of the U-phase, the V-phase, and the W-phase. The motor-side bus bar 100 is embedded in the resin structure 51 of the motor-side terminal block 50. The motor-side bus bar 100 is made of metal. The adjacent motor-side bus bars 100 are insulated from each other by the resin structure 51 that is made of the resin.

In particular, the guide portion 58 of the motor-side terminal block 50 holds the three motor-side bus bars 100 in a manner to be aligned in the left-right direction and extend in the up-down direction. The guide portion 58 covers an upper end portion of the motor-side bus bar 100 from the rear side, the left side, and the right side. The guide portion 58 does not cover the upper end portion of the motor-side bus bar 100 from the front side. The upper end portion of the motor-side bus bar 100 is a motor-side terminal 101 that is exposed forward in the guide portion 58 of the motor-side terminal block 50.

The motor-side terminal 101 is an example of the rotary electric machine side terminal. The motor-side terminal 101 is formed by the upper end portion of the plate-shaped motor-side bus bar 100. The motor-side terminal 101 constitutes the wire K. The guide portion 58 of the motor-side terminal block 50 holds the motor-side terminal 101. The motor-side terminal 101 extends upward toward the insertion portion 84 of the inverter-side terminal block 80. On the contrary, the inverter-side terminal 91 extends downward toward the guide portion 58 of the motor-side terminal block 50. In detail, the inverter-side terminal 91 protrudes downward from the insertion portion 84 of the inverter-side terminal block 80 toward the guide portion 58 of the motor-side terminal block 50.

In the upper end portion of the guide portion 58 of the motor-side terminal block 50, a guide surface 58a that is inclined to extend forward or rearward to the above is provided. A function of the guide surface 58a will be described below.

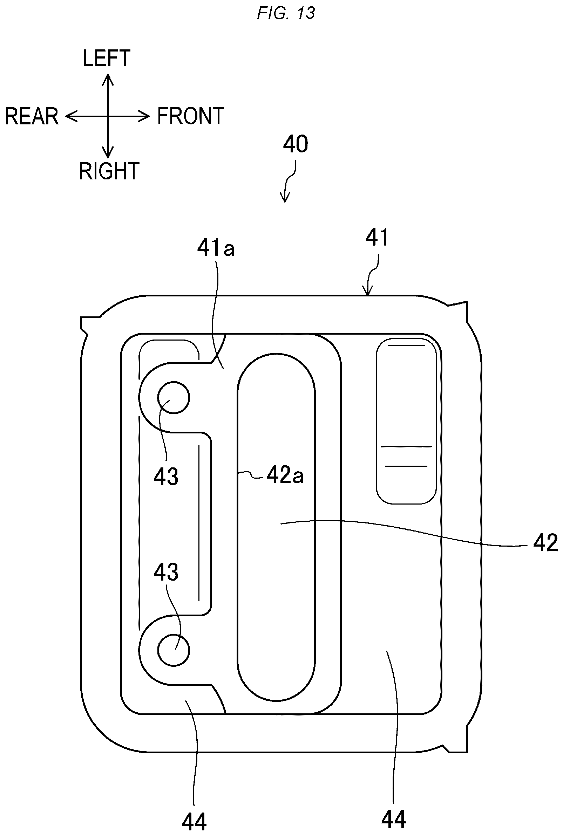

A description will be made on fixing of the inverter-side terminal block 80 to the motor block 40 with reference to FIGS. 7 and 13. FIG. 13 is a plan view in which a fixing surface 41a of the motor block 40 is viewed from above.

The inverter-side terminal block 80 is fixed to the motor block 40 of the motor 2. The motor block 40 is an example of the casing. As described above, the motor block 40 has the substantially quadrangular box shape and has the cavity formed therein. The motor housing 45 (that accommodates the shaft 31, the rotor 32, and the stator 33) is accommodated in the motor block 40.

An upper wall portion 41 of the motor block 40 is provided with the fixing surface 41a. The upper wall portion 41 has a plate shape having a thickness in the up-down direction. The upper wall portion 41 extends in the front-rear direction and the left-right direction. The fixing surface 41a faces upward.

The fixing surface 41a of the upper wall portion 41 of the motor block 40 is provided with an insertion hole 42, two fixing holes 43, and a thinned portion 44. The insertion hole 42 penetrates the upper wall portion 41 in the up-down direction. When seen in the up-down direction, the insertion hole 42 is formed to be long in the left-right direction and short in the front-rear direction.

The two fixing holes 43 are arranged only on the rear side of the insertion hole 42 in the fixing surface 41a. The fixing hole 43 does not exist on the front side of the insertion hole 42 in the fixing surface 41a. The two fixing holes 43 are arranged side by side at intervals in the left-right direction on the rear side of the insertion hole 42. The fixing hole 43 is, for example, a bolt hole and corresponds to the fixture 110, which will be described below.

The thinned portion 44 is provided around the insertion hole 42 in the fixing surface 41a of the motor block 40. The thinned portion 44 is arranged on the front side and the rear side of the insertion hole 42. The thinned portion 44 is formed as a concave portion, and is recessed downward from the fixing surface 41a.

The flange 82a of the fixed portion 81 of the inverter-side terminal block 80 is fixed to the fixing surface 41a of the motor block 40 in the motor 2 by the fixture 110.

The fixture 110 is, for example, a bolt. The fixture 110 penetrates the through hole 82b of the flange 82a in the fixed portion 81 in the up-down direction, and is bolted to the fixing hole 43 in the fixing surface 41a. Between the fixture 110 and the through hole 82b, a clearance capable of absorbing the assembly error, which will be described below, is set.

In the fixed portion 81 of the inverter-side terminal block 80, the through hole 82b for inserting the fixture 110 therethrough is arranged only in the flange 82a on the rear side of the vertically extending portion 83 (the insertion portion 84). In the fixing surface 41a of the motor block 40, the fixing hole 43 for bolting by the fixture 110 is arranged only on the rear side of the insertion hole 42. That is, the fixture 110 is arranged only on the rear side, which is one side in the front-rear direction, with respect to the insertion hole 42 of the fixing surface 41a of the motor block 40. The one side in the front-rear direction is one side in a fastening direction H, which will be described below.

The insertion of the insertion portion 84 of the inverter-side terminal block 80 into the insertion hole 42 of the motor block 40 will be described with reference to FIG. 7. The insertion portion 84 of the inverter-side terminal block 80 is inserted in the insertion hole 42 provided in the fixing surface 41a of the motor block 40. A lower end portion of the insertion portion 84 protrudes slightly downward from a back surface 41b (a surface facing downward on the opposite side to the fixing surface 41a) of the upper wall portion 41 of the motor block 40. An insertion direction V of the insertion portion 84 in the insertion hole 42 is the up-down direction.

The seal member 120 is provided in a clearance E between the outer circumferential surface 84a of the insertion portion 84 of the inverter-side terminal block 80 and an inner circumferential surface 42a of the insertion hole 42 of the motor block 40. The seal member 120 is made of an elastic body. The seal member 120 is made of rubber, for example. The seal member 120 is, for example, an O-ring. The seal member 120 suppresses leakage of oil or the like from the inside of the motor block 40 to the outside of the motor block 40. The seal member 120 is arranged to surround the outer circumferential surface 84a of the insertion portion 84 as a shaft around the axis. The seal member 120 constitutes a shaft seal.

In the outer circumferential surface 84a of the insertion portion 84, an upper portion (a portion on the fixed portion 81 side) of the step portion 85 has a large diameter and a lower portion (a portion on the motor-side terminal block 50 side) thereof has a small diameter. In the inverter-side terminal block 80, the separate portion 87 is fitted to the outer circumferential surface 84a of the insertion portion 84 from the lower side (the motor-side terminal block 50 side). The step portion 85 is provided in the outer circumferential surface 84a of the insertion portion 84.

The step portion 85 in the outer circumferential surface 84a of the insertion portion 84 and the separate portion 87 constitute the groove portion 89. The groove portion 89 faces the inner circumferential surface 42a of the insertion hole 42. The seal member 120 is arranged in the groove portion 89.

Connection between the motor-side terminal 101 and the inverter-side terminal 91 will be described with reference to FIGS. 7, 8, and 11. The motor-side terminal 101 has a plate shape whose thickness direction is the front-rear direction. A front surface of the motor-side terminal 101 is a motor-side connection surface 101a. The motor-side connection surface 101a faces forward. The motor-side connection surface 101a is an example of the connection surface. The motor-side terminal 101 is provided with a motor-side fastening hole 102 that penetrates in the front-rear direction.

The inverter-side terminal 91 has a plate shape whose thickness direction is the front-rear direction. A rear surface of the inverter-side terminal 91 is an inverter-side connection surface 91a. The inverter-side connection surface 91a faces rearward. The inverter-side connection surface 91a is an example of the connection surface. The inverter-side terminal 91 is provided with an inverter-side fastening hole 92 that penetrates in the front-rear direction.

The motor-side connection surface 101a of the motor-side terminal 101 and the inverter-side connection surface 91a of the inverter-side terminal 91 extend parallel to each other in the insertion direction V (the up-down direction). The motor-side connection surface 101a of the motor-side terminal 101 and the inverter-side connection surface 91a of the inverter-side terminal 91 overlap each other in the insertion direction V (the up-down direction).

The motor-side terminal 101 and the inverter-side terminal 91 are connected to each other by being fastened by a fastener 130. The fastening direction H by the fastener 130 is the front-rear direction. The fastening direction H (the front-rear direction) intersects (in detail, is orthogonal to) the insertion direction V (the up-down direction). The fastener 130 is, for example, a bolt. The fastener 130 extends in the fastening direction H (the front-rear direction).

In summary, the motor-side terminal 101 and the inverter-side terminal 91 are connected to each other by being fastened by the fastener 130 in the fastening direction H. At this time, the motor-side connection surface 101a of the motor-side terminal 101 and the inverter-side connection surface 91a of the inverter-side terminal 91 face each other in the fastening direction H (the front-rear direction).

A relationship between the guide portion 58 of the motor-side terminal block 50 and the separate portion 87 of the inverter-side terminal block 80 will be described with reference to FIG. 7. The cylindrical separate portion 87 of the inverter-side terminal block 80 overlaps the guide portion 58 of the motor-side terminal block 50 in a manner to accommodate the guide portion 58 of the motor-side terminal block 50 in the insertion direction V (the up-down direction). In particular, the upper end portion of the guide portion 58 is provided with the guide surface 58a that is inclined to extend forward or rearward to the above. The guide surface 58a is completely accommodated in the cylindrical separate portion 87.

A relationship between the inverter-side terminal 91 and the guide portion 58 will be described with reference to FIG. 7. The inverter-side terminal 91 protrudes downward from the insertion portion 84 of the inverter-side terminal block 80 toward the guide portion 58 of the motor-side terminal block 50. The guide surface 58a of the guide portion 58 of the motor-side terminal block 50 guides the inverter-side terminal 91 to be connected to the motor-side terminal 101.

At least a part of the guide portion 58 of the motor-side terminal block 50 is inclined to approach the motor-side connection surface 101a of the motor-side terminal 101 in order to guide the inverter-side terminal 91 to be connected to the motor-side terminal 101. More specifically, the guide surface 58a of the guide portion 58 of the motor-side terminal block 50 is inclined to approach the motor-side connection surface 101a of the motor-side terminal 101, and to approach the motor-side connection surface 101a of the motor-side terminal 101 as going downward.

A manufacturing method of the wiring connection structure A between the motor 2 and the inverter 7 will be described. This manufacturing method is a method for manufacturing the wiring connection structure A between the motor 2 and the inverter 7. In this manufacturing method, after the motor-side terminal 101 and the inverter-side terminal 91 are connected to each other by being fastened with the fastener 130, the flange 82a of the fixed portion 81 of the inverter-side terminal block 80 is fixed to the fixing surface 41a of the motor block 40 by the fixture 110.

When the motor 2 is assembled to the vehicle 1 as the body to be assembled, the assembly error occurs. Such an assembly error causes connection failure between the motor-side terminal 101 and the inverter-side terminal 91, and thus is not preferable. For this reason, the assembly error has to be absorbed somewhere.

The motor-side terminal 101 and the inverter-side terminal 91 are formed of the plate-shaped bus bars (the motor-side bus bar 100 and the inverter-side bus bar 90), and thus are less likely to be deformed. It is difficult to sufficiently absorb the assembly error by the deformation of the bus bar. In order to absorb the assembly error, it is considered to extend the bus bar to promote the deformation thereof. However, since the wire K becomes too long, it is not preferred from a viewpoint of electric conductivity.

Here, the fixed portion 81 of the inverter-side terminal block 80 is fixed to the fixing surface 41a of the motor block 40 in the motor 2 by the fixture 110. The columnar insertion portion 84 in the inverter-side terminal block 80 extends from the fixed portion 81 toward the motor-side terminal block 50, and is inserted in the insertion hole 42 that is provided in the fixing surface 41a of the motor block 40.

The motor-side terminal 101 and the inverter-side terminal 91 are connected to each other by being fastened by the fastener 130 in the fastening direction H that crosses the insertion direction V by the insertion portion 84 of the inverter-side terminal block 80.

The seal member 120 that is made of an elastic body is provided in the clearance E between the outer circumferential surface 84a of the insertion portion 84 of the inverter-side terminal block 80 and the inner circumferential surface 42a of the insertion hole 42 of the motor block 40. The fixed portion 81 of the inverter-side terminal block 80 can move along the fixing surface 41a of the motor block 40 by elastic deformation of the seal member 120 in the fastening direction H that crosses the insertion direction V by the insertion portion 84 before being fixed to the fixing surface 41a of the motor block 40 by the fixture 110.

When the fixed portion 81 of the inverter-side terminal block 80 moves along the fixing surface 41a of the motor block 40, the assembly error can be absorbed in the fastening direction H that crosses the insertion direction V. After the assembly error is absorbed, the fixed portion 81 of the inverter-side terminal block 80 may be fixed to the fixing surface 41a of the motor block 40 by the fixture 110.

Between the fixed portion 81 of the inverter-side terminal block 80 and the fixing surface 41a of the motor block 40, rather than a plane seal (a planar seal that extends in parallel along the fixing surface 41a), the seal member 120 is provided in the clearance E between the outer circumferential surface 84a of the insertion portion 84 of the inverter-side terminal block 80 and the inner circumferential surface 42a of the insertion hole 42 of the motor block 40.

Since the plane seal is not employed, the fixture 110 for fixing the fixed portion 81 of the inverter-side terminal block 80 to the fixing surface 41a of the motor block 40 does not have to be arranged outside the plane seal.

It is possible to suppress enlargement of the fixing structure between the inverter-side terminal block 80 and the motor block 40.

As it has been described so far, it is possible to provide the wiring connection structure A between the motor 2 and the inverter 7, the compact wiring connection structure capable of absorbing the assembly error that occurs when the motor 2 is assembled to the vehicle 1 as the body to be assembled.

By the relative movement between the motor-side connection surface 101a of the motor-side terminal 101 and the inverter-side connection surface 91a of the inverter-side terminal 91 in the insertion direction V, it is possible to easily absorb the assembly error in the insertion direction V therebetween.

By guiding the inverter-side terminal 91 by the guide surface 58a of the guide portion 58 of the motor-side terminal block 50, the inverter-side terminal 91 can be easily positioned and connected to the motor-side terminal 101.

The groove portion 89 for arranging the seal member 120 can be easily formed in the outer circumferential surface 84a of the insertion portion 84 by using the separate portion 87.

A dimensional increase in the insertion direction V that is associated with fitting of the separate portion 87 to the insertion portion 84 in the inverter-side terminal block 80 can be suppressed by accommodating the guide surface 58a of the guide portion 58 of the motor-side terminal block 50 in the separate portion 87 of the inverter-side terminal block 80.

The fixture 110 for fixing the fixed portion 81 of the inverter-side terminal block 80 to the fixing surface 41a of the motor block 40 is arranged on only one side of the insertion hole 42 of the fixing surface 41a of the motor block 40. The fixing structure between the inverter-side terminal block 80 and the motor block 40 can be simplified.

Since the plane seal is not employed, it is not necessary to secure a uniform surface pressure on the fixing surface 41a by the fixture 110. There is no need to arrange the fixture 110 substantially evenly around the insertion hole 42. The fixture 110 is not limited to being arranged one side of the insertion hole 42 but can be arranged unevenly (unbalanced) in the circumferential direction of the insertion hole 42. The number of the fixtures 110 can be reduced, and sizes of the fixture 110 and the fixing hole 43 can be reduced. An example of being uneven (unbalanced) in the circumferential direction includes a case where the plural fixtures 110 surround only half a circumference of the insertion hole 42 (in a U-shape or a lateral U-shape), surround only a quarter thereof, or surround the insertion hole 42 in a range that is less than the entire circumference.

The thinned portion 44 is provided around the insertion hole 42 in the fixing surface 41a of the motor block 40. Weight of the motor block 40 can be reduced.

When the motor 2 is assembled to the vehicle 1 as the body to be assembled, positioning of the terminal block side flow path 57, through which the refrigerant C flows, is prioritized. The position of the motor-side terminal block 50 including the terminal block side flow path 57 is fixed and can no longer be moved. Thus, the above-described method of absorbing the assembly error by moving the fixed portion 81 of the inverter-side terminal block 80 along the fixing surface 41a of the motor block 40 is further effective.

The present disclosure has been described so far in the preferred embodiment. However, such description is not limiting, and various modifications, replacements, or combinations can be made.

The fixture 110 and the fastener 130 are not limited to the bolts and may each have another form as long as having the function of fixing or fastening.

The seal member 120 may be formed of an elastic body other than rubber. The seal member 120 may have a form other than the O-ring as long as being provided in the clearance E between the outer circumferential surface 84a of the insertion portion 84 and the inner circumferential surface 42a of the insertion hole 42.

The fastening direction H may not be orthogonal to but may intersect the insertion direction V obliquely.

In the above embodiment, the thinned portion 44 is formed as the concave portion but is not limited thereto. The thinned portion 44 may be formed as a hole portion, for example. The hole portion penetrates the upper wall portion 41 of the motor block 40 in the up-down direction. The thinned portion 44 may not be provided.

In the above embodiment, the inverter-side terminal block 80 is fixed to the fixing surface 41a of the motor block 40 in the motor 2, but is not limited thereto.

In a state where the motor-side terminal 101 and the inverter-side terminal 91 are connected to each other by being fastened by the fastener 130, the fixing hole 43 (the insertion hole 42) that is provided in the fixing surface 41a may be provided at a position at which fixing work can be performed by using the fixture 110 from the outside. In other words, in a state where the motor-side terminal 101 and the inverter-side terminal 91 are fastened by the fastener 130, a space for the fixing work using the fixture 110 may be secured.

When this condition is satisfied, the inverter-side terminal block 80 may be fixed to a fixing surface of the motor housing 45 in the motor 2. In this case, the motor housing 45 is an example of the casing. Furthermore, the inverter-side terminal block 80 may be fixed to a fixing surface of the inverter case 70 in the inverter 7. In this case, the inverter case 70 is an example of the casing. That is, the inverter-side terminal block 80 may be fixed to a fixing surface of the casing of the motor 2 or the inverter 7.

The wiring connection structure A may not be applied to the vehicle 1. The wiring connection structure A can also suitably be applied to a body to be assembled other than the vehicle 1.

The guide portion 58 has the guide surface 58a that is inclined with respect to the motor-side connection surface 101a of the motor-side terminal 101, but is not limited thereto. A guide part of the guide portion 58 is not limited to the surface as long as having the inclined shape with respect to the motor-side connection surface 101a of the motor-side terminal 101. The guide part of the guide portion 58 may have a lattice shape or a rib shape that extends in an insertion direction. In addition, an inclination angle may not be constant and may vary.

Since the present disclosure can be applied to the wiring connection structure between the rotary electric machine and the electric power controller, it is extremely useful and has high industrial applicability.

### Reference Signs List:

A: wiring connection structure
V: insertion direction
H: fastening direction
K: wire
F: electric power
E: clearance
DU: drive unit
J: rotation axis
C: refrigerant
1: vehicle (body to be assembled)
1a: front compartment
1b: front wheel
2: motor (rotary electric machine)
3: engine
4: battery
5: joint
6: transmission
7: inverter (electric power controller)
8: cable
15: flow path coupling mechanism
20: heat exchanger
21: water pump
22: pipe
31: shaft
32: rotor
33: stator
34: stator cooling flow path
35: partition wall
36: coil coupling bus bar
36a: connection piece
40: motor block (casing)
41: upper wall portion
41a: fixing surface
41b: back surface
42: insertion hole
42a: inner circumferential surface
43: fixing hole
44: thinned portion
45: motor housing (casing)
46: attachment base
47: attachment surface
47a: inlet
47b: outlet
47c: fastening hole
47d: positioning hole
50: motor-side terminal block (rotary electric machine side terminal block)
51: resin structure
52: attachment portion
53: attachment surface
53a: outlet
53b: inlet
53c: O-ring groove
53d: positioning projection
53e: fastening hole
54: O-ring
55: flange portion
56: connection portion
56a: inflow port
56b: outflow port
57: terminal block side flow path (flow path)
57a: first terminal block side flow path
57b: second terminal block side flow path
58: guide portion
58a: guide surface (part)
61: DC-side connector
61a: positive bus bar
61b: negative bus bar
62: smoothing capacitor
63: control board
70: inverter case (casing)
80: inverter-side terminal block (electric power controller side terminal block)
81: fixed portion
82: base portion
82a: flange
82b: through hole
83: vertically extending portion
84: insertion portion
84a: outer circumferential surface
85: step portion
86: insertion portion side engagement piece
87: separate portion
88: separate portion side engagement piece
89: groove portion
90: inverter-side bus bar (bus bar)
91: inverter-side terminal (electric power controller side terminal)
91a: inverter-side connection surface (connection surface)
92: inverter-side fastening hole
100: motor-side bus bar (bus bar)
101: motor-side terminal (rotary electric machine side terminal)
101a: motor-side connection surface (connection surface)
102: motor-side fastening hole
110: fixture
120: seal member
130: fastener
140:fastener

## Claims

1. A wiring connection structure between a rotary electric machine (2) and an electric power controller (7) comprising:
• the rotary electric machine (2); and
• the electric power controller (7) that is electrically connected to the rotary electric machine via a wire (K) and controls electric power applied to the rotary electric machine,
wherein:
• the rotary electric machine has a rotary electric machine side terminal block (50) that holds a rotary electric machine side terminal (101) constituting the wire,
• the electric power controller has an electric power controller side terminal block (80) that holds an electric power controller side terminal (91) constituting the wire,
• the electric power controller side terminal block includes:
∘ a fixed portion (81) that is fixed to a fixing surface (41a) of a casing (40) in the rotary electric machine or the electric power controller by a fixture (110); and
∘ a columnar insertion portion (84) that extends from the fixed portion to the rotary electric machine side terminal block and is inserted in an insertion hole (42) provided in the fixing surface, wherein:
• the rotary electric machine side terminal (101) is formed of a plate-shaped bus bar (100) and extends toward the insertion portion of the electric power controller side terminal block,
• the electric power controller side terminal (91) is formed of a plate-shaped bus bar (90) and extends toward the rotary electric machine side terminal block,
• the rotary electric machine side terminal and the electric power controller side terminal are connected to each other when being fastened by a fastener (130) in a fastening direction that crosses an insertion direction by the insertion portion, and
• a seal member (120) that is formed of an elastic body is provided in a clearance between an outer circumferential surface (84a) of the insertion portion and an inner circumferential surface (42a) of the insertion hole.

2. The wiring connection structure according to claim 1, wherein
• a connection surface (101a, 91a) of the rotary electric machine side terminal and a connection surface of the electric power controller side terminal extend in parallel to each other in the insertion direction.

3. The wiring connection structure according to claim 1 or 2, wherein
• the rotary electric machine side terminal block has a columnar guide portion (58) that extends toward the insertion portion and holds the rotary electric machine side terminal,
• the electric power controller side terminal protrudes from the insertion portion toward the guide portion, and
• the guide portion is inclined in a manner that at least a part thereof approaches a connection surface of the rotary electric machine side terminal in order to guide the electric power controller side terminal, which protrudes from the insertion portion toward the guide portion, to be connected to the rotary electric machine side terminal.

4. The wiring connection structure according to claim 1 or 2, wherein
• the electric power controller side terminal block includes a cylindrical separate portion (87) that is formed as a separate body from the insertion portion,
• the outer circumferential surface of the insertion portion is provided with a step portion (85) whose portion on a side of the fixed portion has a large diameter and whose portion on an opposite side from the fixed portion has a small diameter,
• the separate portion is fitted to the outer circumferential surface of the insertion portion from the opposite side from the fixed portion, and
• the seal member is arranged in a groove portion (89) that includes the step portion and the separate portion.

5. The wiring connection structure according to claim 4, wherein
• the rotary electric machine side terminal block has a columnar guide portion (58) that extends toward the insertion portion and holds the rotary electric machine side terminal,
• the electric power controller side terminal protrudes from the insertion portion toward the guide portion, and
• in the insertion direction, the separate portion overlaps the guide portion to accommodate the guide portion.

6. The wiring connection structure according to claim 1 or 2, wherein
• the fixed portion (81) is fixed to the fixing surface (41a) by the fixture that is arranged only on one side of the insertion hole (42).

7. The wiring connection structure according to claim 1 or 2, wherein
• a thinned portion (44) is provided around the insertion hole (42) in the fixing surface.

8. The wiring connection structure according to claim 1 or 2, wherein
• the rotary electric machine side terminal block (50) includes a flow path (57), through which a refrigerant (C) for cooling the rotary electric machine flows.

9. The wiring connection structure according to claim 1 or 2, wherein
• the rotary electric machine (2) and the electric power controller (7) are mounted on a vehicle (1).

10. A method for manufacturing the wiring connection structure between the rotary electric machine (2) and the electric power controller (7) according to claim 1 or 2 comprising:
• connecting the rotary electric machine side terminal (101) and the electric power controller side terminal (91) to each other by being fastened by the fastener (130), and thereafter fixing the fixed portion (81) to the fixing surface (41a) by the fixture (110).
